# EUROPEAN PATENT APPLICATION

(11) **EP 1 768 369 A1**
(43) Date of publication of application: **28.03.2007**
(21) Application number: 06014100.9
(22) Date of filing: 07.07.2006
(51) Int. Cl.: H04M 3/533

(54) **Presence and preference enabled voice response system and method**

(30) Priority: 23.09.2005 US 233986
(71) Applicant: Alcatel, 75008 Paris (FR)
(72) Inventor: Jachner, Jack, Lexington, MA 02420 (US)
(74) Representative: Schäfer, Wolfgang

(57) **Abstract**

A voice response system and method are described herein which after learning that a caller has unsuccessfully attempted to contact a called party functions to: (1) obtain presence information about one or more real-time activities of the called party; (2) use the presence information to create a customized voice message; and (3) play the customized voice message to the caller. In the preferred embodiment, a presence system collects the presence information which identifies the real-time activities of the called party and forwards at least a portion of the collected presence information to the voice response system.

## Description

### BACKGROUND OF THE INVENTION

### Field of the Invention

The present invention relates in general to a voice response system which after being notified that a caller has unsuccessfully attempted to call a called party functions to obtain presence information about one or more real-time activities of the called party, use the presence information to create a customized voice message, and play the customized voice message to the caller.

### Description of Related Art

Today there are many types of voice response systems which can be used to interact with a caller that is attempting to call a called party but for whatever reason is not able to reach the called party. These voice response systems include, for example, answering machines, interactive voice response (IVR) systems and automated attendant systems.

The traditional answering machine plays a pre-recorded message to a caller and then records a message from the caller when that caller is not able to contact the called party. For instance, the answering machine can play a message to a caller as follows: "Hello, Jane is not available at this time if you like please leave her a message at the tone and she will return the call as soon as possible." Then, the caller would leave a message.

The traditional IVR system plays a pre-recorded message to a caller and then receives and reacts to a response from the caller when he/she is not able to contact the called party. For instance, the IVR system can play a message to the caller as follows: "Hello, John is not available at this time if you like please press "1" to leave him a voicemail, or press "2" to page him etc....". And, if the caller presses "2" then the IVR system pages John.

The traditional automated attendant system functions like the IVR system except that it can also play messages and make routing decisions based on who the caller happens to be and their relation to the called party. In particular, the traditional automated attendant system can identify a caller by using their caller ID and if the caller has a special relationship with the called party then it can automatically route their call from the work phone (for example) of the called party to another phone like the mobile phone of the called party. For instance, the automated attendant system can receive a call from Don (caller) who is attempting to call Fred (called party) at his work phone. The automated attendant system recognizes that Fred (called party) has placed Don (caller) on a pre-approved list which directs the automated attendant system to forward the call to a mobile phone carried by Fred (called party).

As can be seen, the more sophisticated voice response systems like the IVR system and the automated attendant system attempt to model a human assistant/secretary. However, these voice response systems fail to model what a human assistant/secretary does when he/she screens calls for his/her manager. Because, the human assistant/secretary is able to maintain knowledge of the current activity of the manager, ascertain who is calling, make a decision as to how much to reveal to the caller, communicate the current or next availability of the manager based on who the caller is in relation to the manager, and/or route the call if appropriate. In particular, these voice response systems fail to model a human assistant/secretary because they cannot determine and convey the real-time availability of the called party. Moreover, these voice response systems are not adapted to provide a specific response to a specific caller based on the real-time availability of the called party. These problems and other problems are solved by the voice response system and method of the present invention.

### BRIEF DESCRIPTION OF THE INVENTION

The present invention includes a voice response system which after learning that a caller has unsuccessfully attempted to contact a called party functions to: (1) obtain presence information about one or more real-time activities of the called party; (2) use the presence information to create a customized voice message; and (3) play the customized voice message to the caller. In the preferred embodiment, a presence system collects the presence information which identifies the real-time activities of the called party and forwards at least a portion of the collected presence information to the voice response system.

### BRIEF DESCRIPTION OF THE DRAWINGS

A more complete understanding of the present invention may be obtained by reference to the following detailed description when taken in conjunction with the accompanying drawings wherein:
FIGURE 1 is a block diagram which is used to help describe how a voice response system can create and play a customized voice message to a caller that has unsuccessfully attempted to call a called party in accordance with the present invention;
FIGURE 2 is a flowchart that illustrates the basic steps of a method for creating and playing a customized voice message to caller that has unsuccessfully attempted to call a called party in accordance with a first embodiment of the present invention; and
FIGURE 3 is a flowchart that illustrates the basic steps of a method for creating and playing a customized voice message to a caller that has unsuccessfully attempted to call a called party in accordance with a second embodiment of the present invention.

### DETAILED DESCRIPTION OF THE DRAWINGS

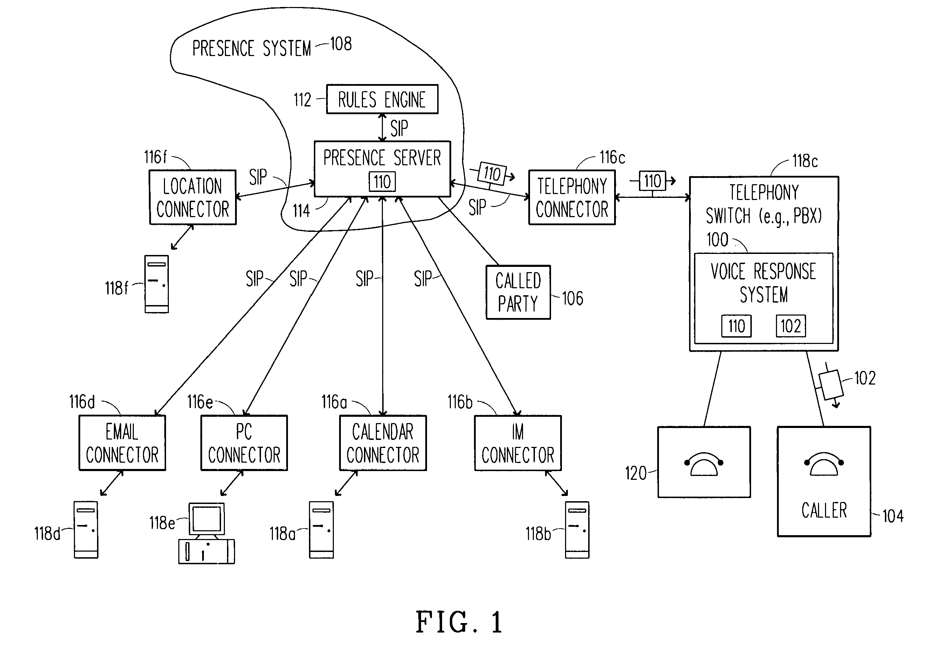

Referring to FIGURE 1, there is illustrated a diagram which is used to help describe how a voice response system 100 can create and play a customized voice message 102 to a caller 104 that has unsuccessfully attempted to call a called party 106 in accordance with the present invention. In a basic embodiment, the voice response system 100 (which includes a processor) is able to function like a human attendant/secretary because it can create and play a customized voice message 102 which conveys the real-time availability and ability of the called party 106 to communicate with the caller 104. In a more advanced embodiment, the voice system 100 can create and play a customized message 102 which conveys the real-time availability, ability and desire of the called party 106 to communicate with a specific caller 104. To enable either of these embodiments, the voice response system 100 needs to obtain real-time information about the activities of the called party 106. And, to obtain this real-time information, the voice response system 100 needs to interact with a presence system 108.

The presence system 108 collects information about the real-time activities of the called party 106 and then publishes at least a portion of that information (which is known as presence information 110) to the voice response system 100. As shown in FIGURE 1, the presence system 108 includes a rules engine 112 which is connected to a presence server 114. Alternatively, the rules engine 112 could be co-located with the presence server 114. In either case, the presence server 114 is coupled via multiple Session Initiation Protocol (SIP) interfaces (for example) to various connectors 116a, 116b...116f which in turn are coupled to various devices 118a, 118b...118f. In the example shown, the connectors 116 include a calendar connector 116a, an IM connector 116b, a telephony connector 116c, an email connector 116d, a PC connector 116e and a location connector 116f. And, the devices 118 include a calendar server 118a, an IM server 118b, a telephony switch 118c, an email server 118d, a PC 118e and a location sever 118f. The connectors 116a, 116b...116f and devices 118a, 118b...118f can be distributed (shown) or co-located (not shown). For clarity, the description provided herein about the presence system 108, the various connectors 116a, 116b...116f and the various devices 118a, 118b...118f omits certain details and components that are well known in the industry and are not necessary to understand the present invention.

The presence server 114 collects a wide-variety of information about the real-time activities of the called party 106. For instance, the presence server 114 can collect presence information 110 from the telephony switch 118c (via the telephony connector 116c) about whether or not the called party 106 is currently talking on their phone 120 (shown as a landline phone 120). If the called party 106 is talking on the phone 120, then the collected presence information 110 may be represented as "on-the-phone". The telephony switch 118c can be anyone of a wide variety of switches including, for example, a private branch exchange (PBX) 118c (shown), a carrier switch, a mobile switch, or a voice switch.

The presence server 114 can also collect presence information 110 from the calendar server 118a (via the calendar connector 116a) about whether or not the called party 106 is currently participating in a meeting or is about to participate in a meeting. The calendar server 118a may also indicate the scheduled duration of the meeting. The presence server 114 can also collect other types of presence information 110 from the calendar server 118a such as if the called party 106 is "out of the office", "on vacation" etc...

In addition, the presence server 114 can collect presence information 110 from the IM server 118b (via the IM connector 116b) which indicates whether or not the called party 106 is currently sending IM message(s) to other people. The presence server 114 can also collect presence information 110 from the email server 118e (via the email connector 116e) which indicates whether or not the called party 106 is currently reading or sending email messages. Moreover, the presence server 114 can collect presence information 110 from the PC 118f (via the PC connector 116f) which indicates whether or not the person 102 is currently typing on their keyboard. And, the presence server 114 can also collect presence information 110 from the location server 118f (via the location connector 116f) about the current location (e.g., work, home, conference room, cafeteria) of the called party 106. For instance, the called party 106 may have to carry a RFID (radio frequency identification) to enable the location server 118f to determine their position.

As can be seen, the presence server 114 can collect a wide variety of presence information 110 about the real-time activities of the called party 106. Following is a list of some of the different types of presence information 110 that can be collected:
- Telephony presence "on the phone", "do not disturb", "on a conference call", "muted"
- IM presence, "on-line", "away", "out to lunch"...
- Calendar presence, "in a meeting", "5 minutes before a meeting"...
- Location presence, "at home", "in the office", "out of the office", "in conference room"...
- Etc.

Of course, the presence server 114 can collect other types of presence information 110 which are not mentioned above but could also be used by the voice response system 100 to create and play a customized voice message 102. At this point and with this information 110, the voice response system 100 could create and play a customized voice message 102 that indicates the real-time availability and ability of the called party 106 to communicate with the caller 104. For example, the voice response system 100 can use the presence information 110 it receives to create a customized voice message 102 that states "Hello, John is currently in a meeting that is scheduled to last until 3PM. Please press "1" if you would like to leave him a voicemail or press "2" if you would like to be forwarded to another salesman...". In this case, the voice response system 100 receives and uses presence information 110 that has not been aggregated/filtered by the rules engine 112. This scenario is described next.

If the advanced embodiment of the present invention is used, then the rules engine 112 would aggregate the collected presence information 110 and analyze the information 110 in view of stored preference rules/policies. The called party 106 and their employer (for example) can establish the preference rules/policies which function to dictate which if any of the presence information 110 can be sent at this time to the voice response system 100. For example, the rules engine 112 can use the preference rules/policies to learn that none of the person's presence information 110 should be published to a particular caller. Or, the rules engine 112 can use the preference rules/policies to output aggregated/filtered presence information 110 which indicates a preferred communication device and a means (e.g., another telephone number) that a particular caller 104 can use to reach the called party 106. Basically, the rules engine 112 can use the preference rules/policies to output aggregated/filtered presence information 110 that is adapted to:
- The filtered presence of the called party 106.
- The identity of the caller 104 and the relationship between caller 104 and the called party 106.
- The privacy preferences of the called party 106.
- The policies of the system administrator/employer.
- Security considerations.
- The time of day that the call is received by the voice response system 100.
- Etc.

In this way, the advanced embodiment of the voice response system 100 could create and play a customized voice message 102 that indicates the real-time availability, ability and desire of the called party 106 to communicate with a specific caller 104. For instance, the voice response system 100 can use the presence information 110 it receives to create a customized voice message 102 that states "Hello Cindy, John is currently out of the office but he is expecting your call so please wait while this phone call is forwarded to his mobile phone." In this case, the voice response system 100 receives and uses presence information 110 that has been aggregated/filtered by the rules engine 112. In another embodiment, the voice response system 100 may receive the basic presence information 110 and the preference rules/polices and then create a customized voice message 102 for a specific caller 104. The former way may be more desirable since it may be safer to maintain the preference rules/polices within the rules engine 112 rather than making that information public by sending it to the voice response system 100.

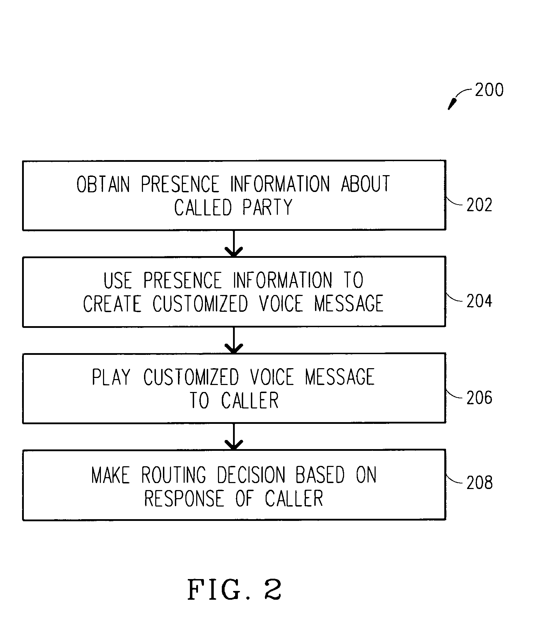

Referring to FIGURE 2, there is a flowchart that illustrates the basic steps of a method 200 that can be used by the voice response system 100 to create and play a customized voice message 102 for a caller 104 that has unsuccessfully attempted to call a called party 106 in accordance with a first embodiment of the present invention. As shown, the voice response system 100 requests and obtains presence information 110 about one or more real-time activities of the called party 106 (step 202). The voice response system 100 uses the presence information 110 to create a customized voice message 102 (step 204). Then, the voice response system 100 plays the customized voice message 102 to the caller 104 (step 206). For instance, the customized voice message 102 can be played with the aid of existing technologies, like a recorded library of utterances, a text-to-speech program, or a VXML (voice extended markup language) program. The voice response system 100 can also make the appropriate routing decision based on a response received from the caller 104 after they listen to the customized voice message 102 (step 208).

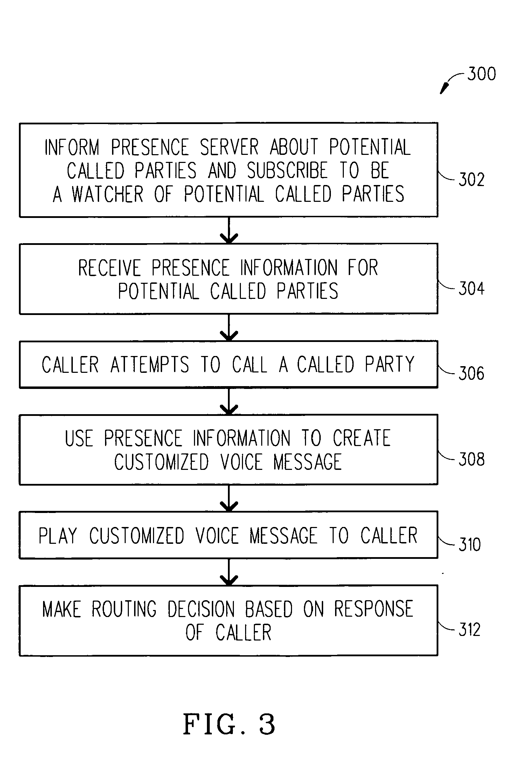

Referring to FIGURE 3, there is a flowchart that illustrates the basic steps of a method 300 for creating and playing a customized voice message 102 to a caller 104 that has unsuccessfully attempted to call a called party 106 in accordance with a second embodiment of the present invention. Beginning at step 302, the telephony switch 118c (via the telephony connector 116c) informs the presence server 114 about all of the people (potential called parties 106) that it services. And, the telephony switch 118c also subscribes to be a watcher of the potential called parties 106. At step 304, the voice response system 100 (which is associated with the telephony switch 118c) receives the presence information 110 for all of the potential called parties 106. The voice response system 100 can receive the presence information 110 at predetermined times or whenever the presence changes for one of the potential called parties 106. At step 306, the caller 104 attempts to call a called party 106 but for whatever reason the called party 106 has not answered the call. At step 308, the voice response system 100 uses the presence information 110 to create a customized voice message 102. At step 310, the voice response system 100 plays the customized voice message 102 to the caller 104. At step 312, the voice response system 100 makes a routing decision based on a response received from the caller 104 after they listen to the customized voice message 102.

From the foregoing, it can be readily appreciated by those skilled in the art that the present invention includes a method for providing a customized voice message 102 to a specific caller 104 that indicates the real-time availability, ability and desire of the called party 106 to communicate with that specific caller 104. The customized voice message 102 is made with the aid of a rich presence system 108 that estimates the current availability of the called party 106 and also implements intelligent processing to determine the preference of the called party 106 to communicate with the caller 104 by taking into consideration the following (for example): (1) relationship of the caller 104 to the called party 106; (2) the current presence of the called party 106; (3) the time of day, current or upcoming events in the calendar of the called party 106; (4) the current state of the telephone 120 and/or IM system of the called party 106; (5) administrator policies; and/or (6) security considerations.

In an alternative embodiment, the presence system 108 can create the customized voice message 102 for the caller 104 which is then played by the voice response system 100. For instance, the presence system 108 can create the customized voice message 102 by: (1) using a presence server 114 which determines a presence state of a called party 106; and (2) by using a rules engine 112 to adapt the customized voice response 102 so it can communicate an appropriate availability to a particular calling party 104 which is responsive to the presence state of the called party 106 and the predetermined preferences of the called party 106. The predetermined preferences can include rules/policies based on time, date, relationship with the calling party and/or upcoming events of the called party (for example).

Following are some additional features, advantages and uses of the present invention:
- The present invention improves communication efficiency for both the callers 104 and called parties 106 and reduces wasted time in "voice mail tag".
- Enterprise users and residential users can use the present invention and enjoy an answering service that mimics an actual human assistant.
- The presence system 108 and the voice response system 100 can support any number of callers 104 and called parties 106 although only one of each was shown and described herein.
- The voice response system 100 is able to model what a human assistant performs when he/she screens calls for his/her manager (called party 106). Because, the voice response system 100 is able to maintain knowledge of the current activity of the manager 106, ascertain who is calling, make a decision as to how much to reveal to the caller 104, communicate the current or next availability of the manager 106 based on who the caller 104 is in relation to the manager 106, and/or route the call if appropriate. This is a marked improvement over the prior art.
The following presence system as well as the following features, separately or in any combination, may also constitute advantageous embodiment of the described or claimed invention:
- A presence system, comprising: a presence server that collects information about one or more activities of a called party, and then publishes presence information that includes at least part of the collected information, wherein a voice response system receives and uses the published presence information to create a message which indicates a real-time availability and ability of the called party to communicate with a caller that has unsuccessfully attempted to call the called party.
- The claimed and/or described presence system, further comprising a rules engine that applies preference rules/policies to the collected information to select the presence information which is published and received by said voice response system that uses the published presence information to create a personalized message which indicates a real-time availability, ability and desire of the called party to communicate with the caller that has unsuccessfully attempted to call the called party;
- The claimed and/or described presence system, wherein said preference rules/policies are established by the called party and/or an administrator;
- The claimed and/or described presence system, further comprising a rules engine that stores preference rules/policies which are published along with the preference information to said voice response system that uses the published presence information and the published preference rules/policies to create a personalized message which indicates a real-time availability, ability and desire of the called party to communicate with the caller that has unsuccessfully attempted to call called party;
- The claimed and/or described presence system, wherein said preference rules/policies are established by the called party and/or an administrator;
- The claimed and/or described presence system, wherein said presence server collects the information about one or more activities of the called party from connectors that interface with at least one of the following: a telephony system; a personal computer; a calendar server; an Instant Message server; and/or an email server;
- The claimed and/or described voice response system, wherein said processor obtains presence information that was collected by a presence server and then processed by a rules engine;
- A presence system, comprising: a presence server for determining a presence state of a called party; and a rules engine for adapting a voice response to communicate an appropriate availability of the called party to a calling party responsive to the presence state and predetermined preferences of the called party;
- The claimed and/or described presence system, wherein the predetermined preferences includes time, date, relationship with the calling party and/or upcoming events of the called party;
- The claimed and/or described method, wherein said presence information about one or more activities of the called party is obtained by a presence server from: a telephony system; a personal computer; a calendar server; an Instant Message server; and/or an email server.

Although several embodiments of the present invention have been illustrated in the accompanying Drawings and described in the foregoing Detailed Description, it should be understood that the invention is not limited to the embodiments disclosed, but is capable of numerous rearrangements, modifications and substitutions without departing from the spirit of the invention as set forth and defined by the following claims.

## Claims

1. A method for creating and playing a customized voice message to a caller that has unsuccessfully attempted to contact a called party, said method comprising the steps of:
obtaining presence information about one or more activities of the called party;
using the presence information to create the customized voice message; and
playing the customized voice message to the caller.

2. The method of Claim 1, further comprising a step of making a routing decision based on input received from the caller in response to hearing the played customized voice message.

3. The method of Claim 1, wherein said customized voice message indicates a real-time availability and ability of the called party to communicate with the caller.

4. The method of Claim 1, wherein said using step further includes using preference policies/rules associated with the caller and/or the called party when analyzing the presence information to create the customized voice message.

5. The method of Claim 4, wherein said customized voice indicates a real-time availability, ability and desire of the called party to communicate with the caller.

6. A voice response system, comprising:
a processor that upon being notified that a caller is attempting to call a called party:
obtains presence information about one or more activities of the called party;
uses the presence information to create a customized voice message;
plays the customized voice message to the caller; and
makes a routing decision based on input received from the the caller in response to hearing the played customized voice message.

7. The voice response system of Claim 6, wherein said customized voice message indicates a real-time availability and ability of the called party to communicate with the caller.

8. The voice response system of Claim 6, wherein said customized voice indicates a real-time availability, ability and desire of the called party to communicate with the caller.

9. The voice response system of Claim 6, wherein said processor obtains presence information that was collected by a presence server.

10. The voice response system of Claim 6, wherein said processor obtains presence information that was collected by a presence server which interacted with:
a telephony system;
a personal computer;
a calendar server;
an Instant Message server; and/or
an email server.
